(19) Europäisches Patentamt
European Patent Office
Office européen des brevets

(11) EP 4 759 881 A1

(12) EUROPEAN PATENT APPLICATION
published in accordance with Art. 153(4) EPC

(43) Date of publication:
**17.06.2026 Bulletin 2026/25**

(21) Application number: **24851614.8**

(22) Date of filing: **25.07.2024**

(51) International Patent Classification (IPC):
***C08L 81/02*** *(2006.01)* ***C08K 3/04*** *(2006.01)*
***C08K 7/02*** *(2006.01)*

(52) Cooperative Patent Classification (CPC):
**C08K 3/04; C08K 7/02; C08L 81/02;** Y02E 60/10

(86) International application number:
**PCT/JP2024/026546**

(87) International publication number:
**WO 2025/033188 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.08.2023 JP 2023129125**

(71) Applicant: **DIC Corporation**
**Tokyo 174-8520 (JP)**

(72) Inventors:
- **TAKAHASHI, Yoshihisa**
  **Ichihara-shi, Chiba 290-8585 (JP)**
- **ASANO, Kiichi**
  **Ichihara-shi, Chiba 290-8585 (JP)**
- **WATANABE, Kazuhiro**
  **Ichihara-shi, Chiba 290-8585 (JP)**

(74) Representative: **Kraus & Lederer PartGmbB**
**Thomas-Wimmer-Ring 15**
**80539 München (DE)**

# (54) POLYARYLENE SULFIDE RESIN COMPOSITION, MOLDED ARTICLE, COMPOSITE, AND PRODUCTION METHODS THEREFOR

(57) Provided are a resin composition having excellent conductivity, toughness, processability, and long-term stability, a molded article, a composite, and production methods therefor. Specifically, provided is a polyarylene sulfide (PAS) resin composition containing a PAS resin (A) and a carbon-based material (B) other than carbon fibers as essential components, in which the PAS resin (A) has a melt viscosity (V6) of 200 Pa·s or less, the carbon-based material (B) other than carbon fibers has a pH of 6 or more, a mixing amount of the carbon-based material (B) other than carbon fibers is 5 to 80 parts by mass relative to 100 parts by mass of the PAS resin (A), and a bending elastic modulus is 18 GPa or less. A molded article, a composite, and production methods therefor are also provided.



Processed by Luminess, 75001 PARIS (FR)

## Description

Technical Field

The present invention relates to a polyarylene sulfide resin composition, a polyarylene sulfide resin molded article, and a resin-metal composite, and production methods therefor.

Background Art

In recent years, the demand for secondary batteries typified by a lithium-ion battery (LiB) has increased with promotion of electrification of automobiles and spread of renewable energy. An electrode part for LiB is required to have appropriate conductivity, small variation in conductivity, toughness, and reliability during long-term use (long-term stability).

On the other hand, a polyarylene sulfide (hereinafter abbreviated as "PAS") resin typified by a polyphenylene sulfide (hereinafter abbreviated as "PPS") resin has excellent mechanical strength, heat resistance, chemical resistance, molding processability, dimensional stability, and flame retardancy, and therefore the PAS resin is mainly and widely used for materials for parts of electric and electronic apparatus and parts of automobiles, and the like.

Since the PAS resin is an insulating material, it is necessary to impart conductivity in the case of using the PAS resin in a safe part for an anode of LiB, and a method for compounding a conductive material, such as carbon fibers or carbon black, is general. Since the PAS resin is used in contact with a metal member, the PAS resin is required to have high toughness from the viewpoint of adhesion to the member.

As a PAS resin composition for conventional LiB, for example, PTL 1 discloses a PPS resin composition containing a PAS resin, graphite, carbon fibers, and a polyolefin wax. PTL 2 discloses a resin composition containing PPS, conductive carbon black, carbon fibers, and graphite.

Citation List

Patent Literature

PTL 1: Japanese Unexamined Patent Application Publication No. 2006-19227
PTL 2: International Publication WO2002/093670

Summary of Invention

Technical Problem

However, required properties have become more stringent, and the conventional material may not in fact sufficiently satisfy the required properties. In particular, small variation in conductivity and suppression of deterioration during long-term use are required, but it is difficult to achieve all these properties, high conductivity, and toughness.

An object of the present invention is to provide a PAS resin composition having excellent conductivity, toughness, processability, and long-term stability, a molded article, a composite, and production methods therefor.

Solution to Problem

The inventors of the present invention have intensively studied to solve the above-described problems, and as a result, found that when a specific amount of a carbon-based material having a specific pH other than carbon fibers is mixed in a PAS resin having a melt viscosity of 200 Pa·s or less, a resin composition that solves the above-described problems is obtained, and completed the present invention.

Specifically, the present disclosure relates to a PAS resin composition containing a PAS resin (A) and a carbon-based material (B) other than carbon fibers as essential components, in which the PAS resin (A) has a melt viscosity (V6) of 200 Pa·s or less, the carbon-based material (B) other than carbon fibers has a pH of 6 or more, a mixing amount of the carbon-based material (B) other than carbon fibers is 5 to 80 parts by mass relative to 100 parts by mass of the PAS resin (A), and a bending elastic modulus is 18 GPa or less.

In addition, the present disclosure relates to a PAS resin molded article obtained by molding the PAS resin composition described above.

Moreover, the present disclosure relates to a composite member obtained by joining the molded article described

above to a metal member.

Furthermore, the present disclosure relates to a production method for a PAS resin composition, the method including a step of mixing a PAS resin (A) and a carbon-based material (B) other than carbon fibers as essential components and melt-kneading a mixture of the PAS resin (A) and the carbon-based material (B) other than carbon fibers at a temperature equal to or higher than a melting point of the PAS resin (A), in which the PAS resin (A) has a melt viscosity (V6) of 200 Pa·s or less, the carbon-based material (B) other than carbon fibers has a pH of 6 or more, a mixing amount of the carbon-based material (B) other than carbon fibers is 5 to 80 parts by mass relative to 100 parts by mass of the PAS resin (A), and a bending elastic modulus is 18 GPa or less.

In addition, the present disclosure relates to a production method for a molded article, the method including: a step of producing a PAS resin composition by the production method described above; and a step of melt-molding the obtained PAS resin composition.

In addition, the present disclosure relates to a production method for a composite, the method including: a step of producing a molded article by the production method described above; and a step of joining the obtained molded article to a metal member.

Advantageous Effects of Invention

According to the present invention, a resin composition having excellent conductivity, toughness, processability, and long-term stability, a molded article, a composite, and production methods therefor can be provided.

Description of Embodiments

Hereinafter, an embodiment of the present invention will be described in detail, but the scope of the present invention is not limited to the embodiment herein, and various modifications may be made without departing from the spirit of the present invention. When a plurality of upper limit values and a plurality of lower limit values of a specific parameter are described, a suitable numerical value range can be obtained by combining any upper limit value and any lower limit value among the upper limit values and the lower limit values.

A PAS resin composition according to the present embodiment is a PAS resin composition containing a PAS resin (A) and a carbon-based material (B) other than carbon fibers as essential components, in which the PAS resin (A) has a melt viscosity (V6) of 200 Pa·s or less, the carbon-based material (B) other than carbon fibers has a pH of 6 or more, a mixing amount of the carbon-based material (B) other than carbon fibers is 5 to 80 parts by mass relative to 100 parts by mass of the PAS resin (A), and a bending elastic modulus is 18 GPa or less. This will be described below.

<PAS Resin (A)>

The PAS resin composition according to the embodiment contains a PAS resin (A) as an essential component.

The PAS resin has a resin structure containing as a repeating unit a structure in which an aromatic ring is bonded to a sulfur atom. Specifically, the PAS resin composition is a resin containing a structural moiety represented by the following general formula (1):

[Chemical Formula 1]

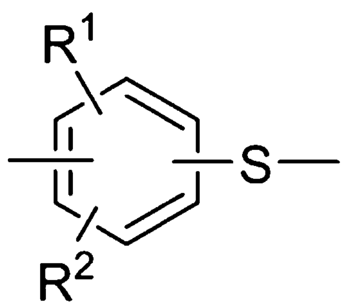

Formula (1)

(wherein $R^1$ and $R^2$ are each independently a hydrogen atom, an alkyl group having 1 to 4 carbon atoms, a nitro group, an amino group, a phenyl group, a methoxy group, or an ethoxy group), and if necessary, a trifunctional structural moiety represented by the following general formula (2):

[Chemical Formula 2]

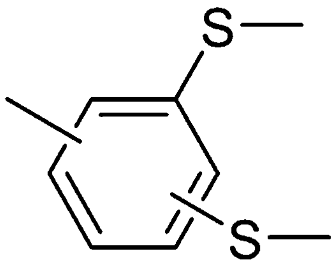

Formula (2)

as repeating units. The amount of the trifunctional structural moiety represented by the formula (2) is preferably within the range of 0.001 to 3% by mole, and particularly preferably within the range of 0.01 to 1% by mole, relative to the total number of moles of other structural moieties.

Herein, especially $R^1$ and $R^2$ in the formula are preferably a hydrogen atom in terms of mechanical strength of the PAS resin. In this case, examples of the structural moiety represented by the formula (1) include a structural moiety represented by the following formula (3) and having bonds at para positions and a structural moiety represented by the following formula (4) and having bonds at meta positions.

[Chemical Formula 3]

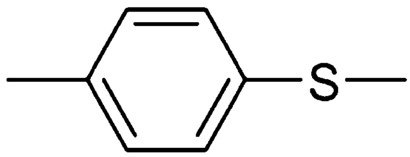

Formula (3)

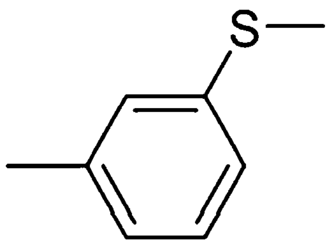

Formula (4)

In particular, the structural moiety represented by the general formula (3) in which a bond of the aromatic ring to the sulfur atom in the repeating unit is a bond at a para position is preferable in terms of heat resistance of the PAS resin.

The PAS resin may contain not only the structural moieties represented by the formulae (1) and (2), but also structural moieties represented by the following structural formulae (5) to (8):

[Chemical Formula 4]

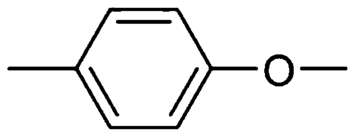

Formula (5)

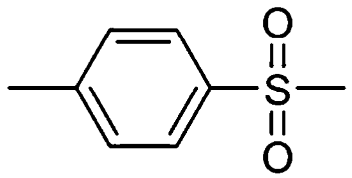

Formula (6)

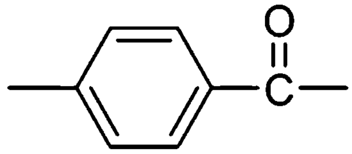

Formula (7)

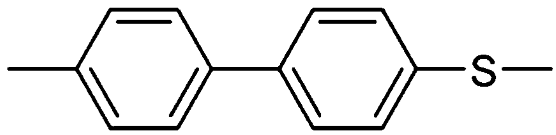

Formula (8)

in an amount of 30% by mole or less relative to the total amount of the structural moieties represented by the formulae (1) and (2). In particular, in the present disclosure, it is preferable that the amount of the structural moieties represented by the general formulae (5) to (8) be 10% by mole or less in terms of heat resistance and mechanical strength of the PAS resin. When the PAS resin contains the structural moieties represented by the general formulae (5) to (8), the structural moieties may be bonded at any pattern to form any of a random copolymer or a block copolymer.

The molecular structure of the PAS resin may have a naphthyl sulfide bond and the like, and the amount thereof is preferably 3% by mole or less, and particularly preferably 1% by mole or less, relative to the total amount of the molecular structure and another structural moiety.

The physical properties of the PAS resin (A) are not particularly limited as long as the effects of the present invention are not impaired, and are as described below.

(Melt Viscosity)

The melt viscosity (V6) of the PAS resin (A) used in the embodiment that is measured at 300°C is 200 Pa·s or less since processability and toughness are well balanced. The melt viscosity is preferably 2 Pa·s or more, and more preferably 30 Pa·s or more. The melt viscosity is preferably 180 Pa·s or less, and more preferably 160 Pa·s or less. In the measurement of the melt viscosity (V6), a flow tester CFT-500D manufactured by Shimadzu Corporation is used for the PAS resin. The melt viscosity is a value measured after the PAS resin is held at 300°C, a load of $1.96\times10^6$ Pa, and a L/D of 10 (mm)/1 (mm) for 6 minutes.

(Non-Newtonian Index)

The non-Newtonian index of the PAS resin (A) used in the embodiment is not particularly limited, and is preferably within the range of 0.90 or more and 2.00 or less. When a linear PAS resin is used, the non-Newtonian index is preferably 0.90 or more, and more preferably 0.95 or more, and preferably 1.50 or less, and more preferably 1.20 or less. Such a PAS resin has excellent mechanical strength and flowability. In the present disclosure, the non-Newtonian index (N value) is a value calculated by the following equation from a shear rate (SR) and a shear stress (SS) that are measured using Capilograph under conditions of the melting point plus 20°C and a ratio L/D of an orifice length (L) to an orifice diameter (D) of 40. As the non-Newtonian index (N value) is closer to 1, the structure is closer to a linear shape. As the non-Newtonian index (N value) is higher, the structure is more branched.

[Equation 1]

$$SR = K \cdot SS^N$$

(wherein SR represents a shear rate ($s^{-1}$), SS represents a shear stress ($dyn/cm^2$), and K represents a constant.)

(Carboxy Group Content)

The carboxy group content of the PAS resin (A) used in the embodiment is preferably within the range of 10 μmol/g or more and 200 μmol/g or less, and more preferably within the range of 20 μmol/g or more and 180 μmol/g or less. When the carboxy group content is within such a range, a molded article having excellent long-term stability can be obtained while the resin composition has favorable processability. In the present disclosure, the carboxy group content is a value measured by the method described in Examples.

(Zeta Potential)

The zeta potential of the PAS resin (A) used in the embodiment that is measured at a pH of 7.8 to 8.2 by a streaming potential method is preferably -70 mV or more, and more preferably -50 mV or more. The zeta potential of the PAS resin is a value measured at a measurement temperature of 22 to 26°C in a 1 mmol/L KCl aqueous solution as an electrolytic liquid using a film of the PAS resin as a test piece with SurPASS3 (Anton Paar). The zeta potential refers to an average value when the zeta potential of the surface of the test piece is measured three times.

(Production Method)

A production method for the PAS resin is not particularly limited, and examples thereof include: (method 1) a method in which a dihaloaromatic compound, and if necessary, a polyhaloaromatic compound or another copolymerization component are polymerized in the presence of sulfur and sodium carbonate; (method 2) a method in which a dihaloaromatic compound, and if necessary, a polyhaloaromatic compound or another copolymerization component are polymerized in a polar solvent in the presence of sulfide-forming agent and the like; (method 3) a method for self-condensing p-chlorothiophenol, with another copolymerization component if necessary; and (method 4) a method in which a diiodo aromatic compound and a simple substance sulfur are melt-polymerized under reduced pressure in the presence of a polymerization inhibitor that may have a functional group such as a carboxy group and an amino group. Among these methods, the method 2 is preferable since it is widely used. During a reaction, an alkali metal salt of carboxylic acid or sulfonic acid, or an alkali hydroxide may be added to adjust the degree of polymerization. The PAS resin obtained by the method 2, especially a method in which a water-containing sulfide-forming agent is introduced into a mixture containing a heated organic polar solvent and a dihaloaromatic compound at a speed at which water can be removed from a reaction mixture, and if necessary, a polyhaloaromatic compound is added, the dihaloaromatic compound and the sulfide-forming agent are reacted in the organic polar solvent, and the amount of water in the reaction system is controlled within the range of 0.02 to 0.5 mol relative to 1 mol of the organic polar solvent to produce the PAS resin (see Japanese Unexamined Patent Application Publication No. H07-228699) or a method in which a dihaloaromatic compound, and if necessary, a polyhaloaromatic compound or another copolymerization component are reacted with an alkali metal hydrosulfide and an alkali metal salt of an organic acid in the presence of a solid alkali metal sulfide and an aprotic polar organic solvent while the amount of the alkali metal salt of an organic acid is controlled within the range of 0.01 to 0.9 mol relative to 1 mol of sulfur source and the amount of water in the reaction system is controlled to be 0.02 mol or less relative to 1 mol of the aprotic polar organic solvent (see WO2010/058713) is particularly preferable. Specific examples of the dihaloaromatic compound include p-dihalobenzene, m-dihalobenzene, o-dihalobenzene, 2,5-dihalotoluene, 1,4-dihalonaphthalene, 1-methoxy-2,5-dihalobenzene, 4,4'-dihalobiphenyl, 3,5-dihalobenzoic acid, 2,4-dihalobenzoic acid, 2,5-dihalonitrobenzene, 2,4-dihalonitrobenzene, 2,4-dihaloanisole, p,p'-dihalodiphenyl ether, 4,4'-dihalobenzophenone, 4,4'-dihalodiphenyl sulfone, 4,4'-dihalodiphenyl sulfoxide, 4,4'-dihalodiphenyl sulfide, and compounds having an alkyl group having 1 to 18 carbon atoms on the aromatic ring of any of the aforementioned compounds. Examples of the polyhaloaromatic compound include 1,2,3-trihalobenzene, 1,2,4-trihalobenzene, 1,3,5-trihalobenzene, 1,2,3,5-tetrahalobenzene, 1,2,4,5-tetrahalobenzene, and 1,4,6-trihalonaphthalene. A halogen atom contained in the above-described compounds is desirably a chlorine atom or a bromine atom.

A post-treatment method for a reaction mixture containing the PAS resin obtained by a polymerization step is not particularly limited. Examples thereof include (post-treatment 1) a method in which after completion of a polymerization reaction, a solvent is distilled off under reduced pressure or normal pressure from the reaction mixture as it is or after

addition of an acid or a base, a solid material after distillation of the solvent is washed with a solvent such as water, the reaction solvent (or an organic solvent having the same solubility in a low molecular weight polymer), acetone, methyl ethyl ketone, and an alcohol, one or two or more times, followed by neutralization, water-washing, filtration, and drying; (post-treatment 2) a method in which after completion of a polymerization reaction, a solvent (a solvent that is soluble in the solvent used for polymerization and is a poor solvent to at least PAS) such as water, acetone, methyl ethyl ketone, an alcohol, an ether, a halogenated hydrocarbon, an aromatic hydrocarbon, and an aliphatic hydrocarbon is added as a precipitating agent, to precipitate PAS and a solid product such as an inorganic salt, and they are filtered off, washed, and dried; (post-treatment 3) a method in which after completion of a polymerization reaction, a reaction solvent (or an organic solvent having the same solubility in a low molecular weight polymer) is added to the reaction mixture and then stirred, the low molecular weight polymer is removed by filtration, and the resultant is washed with a solvent such as water, acetone, methyl ethyl ketone, and an alcohol, one or two or more times, followed by neutralization, water-washing, filtration, and drying; (post-treatment 4) a method in which after completion of a polymerization reaction, water is added to wash the reaction mixture, and if necessary, an acid is added to treat the reaction mixture during water-washing, followed by filtration and drying; and (post-treatment 5) a method in which after completion of a polymerization reaction, the reaction mixture is filtered, and if necessary, washed with the reaction solvent one or two or more times, and then washed with water, followed by filtration and drying. Among the methods, the method of the post-treatment 4 is preferable since a PAS resin having a carboxy group on the terminal of the molecule thereof is obtained.

In the post-treatment method described in the posttreatments 1 to 5, the PAS resin may be dried in vacuum, in air, or in an inert gas atmosphere such as nitrogen.

The mixing amount of the PAS resin (A) in the PAS resin composition according to the embodiment is preferably 30 parts by mass or more, and more preferably 40 parts by mass or more, and preferably 80 parts by mass or less, and more preferably 70 parts by mass or less, relative to 100 parts by mass of the PAS resin composition. When the mixing is within such a range, the resin composition has favorable processability and the chemical resistance and toughness of a molded article are excellent, which is preferable.

As the PAS resin (A) used in the embodiment, a PAS resin obtained by another polymerization by the above-described method can also be used, or a recycled PAS resin can also be used. For example, a PAS resin collected from the PAS resin composition or the PAS resin molded article can also be used, and specific examples thereof include a PAS resin obtained by the above-described post-treatment of a dissolved solution in which contained PAS is dissolved by heating the PAS resin composition or the PAS resin molded article in an organic polar solvent. In addition, a substance obtained by mechanically pulverizing the PAS resin composition or the PAS resin molded article can be used as the PAS resin, and specific examples thereof include a substance obtained by pulverizing a sprue or a runner generated during production of a molded article, a molded article collected as a nonstandard one, or a molded article used once as a product. In this case, the substance may be a pulverized product of the PAS resin composition or the PAS resin molded article that contain a component other than the PAS resin. The PAS resin content is preferably 90 parts by mass or more, more preferably 95 parts by mass or more, and still more preferably 98 parts by mass or more from the viewpoint of mechanical strength.

<Carbon-based Material (B) other than Carbon Fibers>

The PAS resin composition according to the embodiment contains the carbon-based material (B) other than carbon fibers as an essential component. In the present disclosure, the carbon fibers are contained in a fibrous filler (C), and are not contained in the carbon-based material (B).

The carbon-based material (B) other than carbon fibers applicable to the embodiment is not particularly limited as long as it is a carbon-based material other than carbon fibers, and a publicly known material can be used. Examples thereof include carbon black, such as furnace black, thermal black, channel black, ketjen black, gas black, oil black, and acetylene black; graphite, such as earthy graphite, spheroidal graphite, flake graphite, crystalline graphite, swelling graphite, and expandable graphite; carbon nanotubes, such as a single-wall nanotube and a multi-wall nanotube; and fullerene. The graphite may be natural graphite or artificial graphite, and the shape thereof is not limited. Carbon nanotubes can be generally produced by a laser ablation method, an arc heat dissipation CVD method, a plasma CVD method, a gas phase method, a combustion method, or the like. In the present disclosure, carbon nanotubes produced by any method can be used. In order to increase the affinity with a resin as long as the effects of the present invention are not impaired, the surface and tip of carbon nanotubes may be modified with a functional group and used. For example, the surface and tip of carbon nanotubes may be functionalized with a hydroxy group, a carboxy group, or an amino group using an acid or an alkali. Carbon nanotubes may be pre-treated with a coupling agent and used. Examples of the coupling agent include an isocyanate-based compound, an organic silane-based compound, an organic titanate-based compound, and an epoxy compound. Among these, carbon black is preferably used, and furnace black is particularly preferably used from the viewpoint of stability of conductivity.

In addition, the carbon-based material (B) other than carbon fibers applicable to the embodiment has a pH of 6 or more, and preferably a pH of more than 6. When the pH is within such a range, the resin composition and the molded article

are less likely to corrode a contact material (have excellent corrosion resistance), which is preferable. The upper limit of pH is not particularly limited, and is preferably 12 or less, and more preferably 10 or less. The pH of the carbon-based material (B) other than carbon fibers is a value obtained by measuring the pH of a mixed solution of the carbon-based material (B) other than carbon fibers and distilled water with a glass electrode pH meter in accordance with JIS K 6221.

Examples of commercially available products of the carbon-based material (B) other than carbon fibers include "CNP15" manufactured by Ito Graphite Co., Ltd., "DENKA BLACK" manufactured by Denka Company Limited, "3400B" manufactured by Mitsubishi Chemical Corporation, and "Ketjen black" manufactured by Lion Specialty Chemicals Co., Ltd.

When furnace black is used as the carbon-based material (B) other than carbon fibers, the DBP absorption amount is preferably 100 $cm^3$/100 g or more, and more preferably 110 $cm^3$/100 or more. When the DBP absorption amount is within such a range, the balance of conductivity and flowability is excellent. Therefore, this is preferable. The DBP absorption amount of furnace black is a value measured in accordance with a method described in JIS K 6221.

When furnace black is used as the carbon-based material (B) other than carbon fibers, the primary particle diameter is preferably 60 nm or less, and more preferably 50 nm or less. When the primary particle diameter is within such a range, the balance of conductivity and flowability is excellent. Therefore, this is preferable. The primary particle diameter is an average value when at least five or more samples are measured under observation with a transmission electron microscope.

When graphite is used as the carbon-based material (B) other than carbon fibers, the average particle diameter thereof is preferably 5 to 400 μm. When the average particle diameter is within such a range, the resin composition may exhibit excellent dispersibility. From the same viewpoint, the average particle diameter is more preferably 10 μm or more, and still more preferably 15 μm or more, and more preferably 350 μm or less, and still more preferably 300 μm or less. The average particle diameter is an average particle diameter ($D_{50}$) determined from the particle size distribution determined using a laser diffraction and scattering-type particle size measurement device (Microtrac MT3300EXII) in accordance with an ordinary method.

The mixing amount of the carbon-based material (B) other than carbon fibers in the PAS resin composition according to the embodiment is preferably 5 parts by mass or more, and more preferably 10 parts by mass or more, and preferably 80 parts by mass or less, and more preferably 60 parts by mass or less, relative to 100 parts by mass of the PAS resin (A). When the amount is within such a range, the resin composition has favorable processability and the conductivity, mechanical strength, and dimensional stability of a molded article are excellent, which is preferable.

<Fibrous Filler (C)>

The PAS resin composition according to the embodiment can further contain a fibrous filler (C) as an optional component to improve the mechanical strength and improve processability during molding. The fibrous filler (C) applicable to the embodiment is not particularly limited, and a publicly known fibrous filler can be used. For example, a fibrous filler, such as glass fibers, carbon fibers, silane glass fibers, ceramic fibers, aramid fibers, metal fibers, fibers of potassium titanate, silicon carbide, calcium silicate, or wollastonite, or natural fibers can be used.

As the fibrous filler (C) used in the present invention, a fibrous filler processed with a surface treatment agent or a sizing agent can be used, if necessary. This is preferable since the adhesion force to the PAS resin (A) can be improved and the mechanical strength of the obtained resin composition or the obtained molded article are improved. Examples of the surface treatment agent or the sizing agent include at least one type of polymer selected from the group consisting of a silane compound, a titanate compound, an acrylic resin, a urethane resin, a polyether resin, and an epoxy resin having a functional group such as an amino group, an epoxy group, an isocyanate group, or a vinyl group. In particular, when glass fibers are used, the surface treatment agent or the sizing agent containing a urethane resin is particularly preferable from the viewpoint of preventing excess defibration during processing. When the surface treatment agent or the sizing agent contains a urethane resin, the content of the urethane resin is not particularly limited, and from the viewpoint of resistance to humidity and heat, the content is preferably 35% by mass or less, and more preferably 20% by mass or less.

When the PAS resin composition according to the embodiment contains the fibrous filler (C), the mixing amount of the fibrous filler (C) is preferably 20 parts by mass or more, and more preferably 35 parts by mass or more, and preferably 80 parts by mass or less, and more preferably 60 parts by mass or less, relative to 100 parts by mass of the PAS resin (A). When the mixing amount is within such a range, the resin composition has favorable processability and the mechanical strength of the molded article is excellent, which is preferable.

<Silane-coupling Agent (D)>

The PAS resin composition according to the embodiment can further contain a silane-coupling agent (D) as an optional component to improve the mechanical strength and reduce a burr during molding.

The silane-coupling agent (D) applicable to the embodiment is not particularly limited as long as the effects of the

present invention are not impaired. Preferable examples of the silane-coupling agent include a silane-coupling agent having a functional group to be reacted with a carboxy group, such as an epoxy group, an isocyanato group, an amino group, or a hydroxyl group. Examples of such a silane-coupling agent include epoxy group-containing alkoxysilane compounds, such as γ-glycidoxypropyltrimethoxysilane, γ-glycidoxypropyltriethoxysilane, and β-(3,4-epoxycyclohexyl) ethyltrimethoxysilane, isocyanato group-containing alkoxysilane compounds, such as γ-isocyanatepropyltrimethoxysilane, γ-isocyanatepropyltriethoxysilane, γ-isocyanatepropylmethyldimethoxysilane, γ-isocyanatepropylmethyldiethoxysilane, γ-isocyanatepropylethyldimethoxysilane, γ-isocyanatepropylethyldiethoxysilane, and γ-isocyanatepropyltrichlorosilane, amino group-containing alkoxysilane compounds, such as γ-(2-aminoethyl)aminopropylmethyldimethoxysilane, γ-(2-aminoethyl)aminopropyltrimethoxysilane, and γ-aminopropyltrimethoxysilane, and hydroxyl group-containing alkoxysilane compounds, such as γ-hydroxypropyltrimethoxysilane, and γ-hydroxypropyltriethoxysilane.

When the silane-coupling agent (D), which is not an essential component in the embodiment, is mixed, the mixing amount of the silane-coupling agent is not particularly limited as long as the effects of the present invention are not impaired. The mixing amount of the silane-coupling agent is preferably 0.01 parts by mass or more, and more preferably 0.1 parts by mass or more, and preferably 10 parts by mass or less, and more preferably 5 parts by mass or less, relative to 100 parts by mass of the PAS resin (A). When the mixing amount is within such a range, the resin composition has favorable moldability, and especially mold releasability, and the molded article exhibits excellent adhesive properties to an epoxy resin and further improved mechanical strength, which is preferable.

<Thermoplastic Elastomer (E)>

The PAS resin composition according to the embodiment can contain a thermoplastic elastomer (E) as an optional component to improve the mechanical strength.

Examples of the thermoplastic elastomer (E) applicable to the embodiment include a polyolefin-based elastomer, a fluorine-containing elastomer, and a silicone-based elastomer. Among these, a polyolefin-based elastomer is preferable. When the elastomer is added, the mixing amount of the elastomer is not particularly limited as long as the effects of the present invention are not impaired. The mixing amount of the elastomer is preferably 0.01 parts by mass or more, and more preferably 0.1 parts by mass or more, and preferably 10 parts by mass or less, and more preferably 5 parts by mass or less, relative to 100 parts by mass of the PAS resin (A). When the mixing amount is within such a range, the impact resistance of the obtained PAS resin composition is improved, which is preferable.

Examples of the polyolefin-based elastomer include a homopolymer of α-olefin, a copolymer of two or more α-olefins, and a copolymer of one or two or more α-olefins with a vinyl polymerizable compound having a functional group. Examples of the α-olefins include α-olefins having 2 or more and 8 or less carbon atoms, such as ethylene, propylene, and 1-butene. Examples of the functional group include a carboxy group, an acid anhydride group (-C(=O)OC(=O)-), an epoxy group, an amino group, a hydroxyl group, a mercapto group, an isocyanate group, and an oxazoline group. Examples of the vinyl polymerizable compound having the functional group include one or two or more of vinyl acetate; α,β-unsaturated carboxylic acids, such as (meth)acrylic acid; alkyl esters of α,β-unsaturated carboxylic acids, such as methyl acrylate, ethyl acrylate, and butyl acrylate; metal salts of α,β-unsaturated carboxylic acids, such as an ionomer (in which the metal is an alkali metal such as sodium, an alkaline earth metal such as calcium, zinc, or the like); glycidyl esters of α,β-unsaturated carboxylic acids, such as glycidyl methacrylate; α,β-unsaturated dicarboxylic acids, such as maleic acid, fumaric acid, and itaconic acid; and derivatives (monoester, diester, acid anhydride) of the α,β-unsaturated dicarboxylic acids. The thermoplastic elastomer may be used alone, or two or more types thereof may be used in combination.

The PAS resin composition according to the embodiment can contain a filling material (hereinafter referred to as other filling material) other than the carbon-based material (B) other than carbon fibers and the fibrous filler (C) as an optional component as long as the effects of the present invention are not impaired. Examples of the other filling material include fillers having various shapes, such as a plate shape and a granular shape. Specifically, examples thereof include glass flakes, clay, pyrophyllite, bentonite, sericite, mica, attapulgite, ferrite, calcium silicate, zeolite, boehmite, silica, quartz powder, glass beads, glass powder, calcium silicate, aluminum silicate, and diatomaceous earth, metal oxides such as iron oxide, titanium oxide, zinc oxide, and alumina, metal carbonates such as calcium carbonate and magnesium carbonate, metal sulfates such as calcium sulfate and barium sulfate, fumed silica, other silicon carbide, silicon nitride, boron nitride, various types of metal powders, and plant-derived fillers such as cacao husk.

When the other filling material, which is not an essential component in the embodiment, is mixed, the mixing amount of the filling material is not particularly limited as long as the effects of the present invention are not impaired. For example, the mixing amount of the other filler is preferably 1 part by mass or more, and more preferably 5 parts by mass or more, and preferably 600 parts by mass or less, and more preferably 200 parts by mass or less, relative to 100 parts by mass of the PAS resin (A). When the mixing amount is within such a range, the resin composition exhibits favorable moldability, and a molded article has excellent mechanical strength, which is preferable.

In addition to the aforementioned components, according to applications, the PAS resin composition according to the embodiment can further contain as an optional component a synthetic resin (hereinafter simply referred to as synthetic

resin), such as a polyester resin, a polyamide resin, a polyimide resin, a polyetherimide resin, a polycarbonate resin, a polyphenylene ether resin, a polysulfone resin, a polyether sulfone resin, a polyetherether ketone resin, a polyether ketone resin, a polyarylate resin, a polyethylene resin, a polypropylene resin, a polytetrafluoroethylene resin, a polydifluoroethylene resin, a polystyrene resin, an ABS resin, an epoxy resin, a phenol resin, a urethane resin, or a liquid crystal polymer, as appropriate. In particular, it is preferable that a fluorine-containing resin be mixed since sliding properties are further improved. In the present invention, when the synthetic resin, which is not an essential component, is mixed, the amount of the synthetic resin mixed is not particularly limited as long as the effects of the present invention are not impaired. The amount varies according to the purpose thereof, and cannot be generally defined. For example, the amount of the synthetic resin mixed in the resin composition according to the embodiment is within the range of 5 parts by mass or more and 15 parts by mass or less relative to 100 parts by mass of the PAS resin (A). In other words, the ratio by mass of the amount of the PAS resin to the total amount of the PAS resin (A) and the synthetic resin is preferably 100/115 or more, and more preferably 100/105 or more.

Furthermore, the PAS resin composition according to the embodiment may contain as an optional component a commonly known additive such as a colorant, an antistat, an antioxidant, a heat-resistant stabilizer, an ultraviolet stabilizer, an ultraviolet absorber, a foaming agent, a flame retarder, a flame retardant promoter, an antirust agent, a release agent (a metal salt or ester of fatty acid having 18 to 30 carbon atoms, including stearic acid or montanic acid, a polyolefin wax such as polyethylene, etc.), an antimicrobial agent, or an antiviral agent, if necessary. The additive is not an essential component. The amount of the additive is preferably 0.01 parts by mass or more, and preferably 1,000 parts by mass or less, more preferably 100 parts by mass or less, and further preferably 10 parts by mass or less, relative to 100 parts by mass of the PAS resin (A). The amount of the additive may be appropriately adjusted according to a purpose and use application for use without impairing the effects of the present invention.

The PAS resin composition of the present disclosure is characterized by having a bending elastic modulus of 18 GPa or less. The bending elastic modulus is preferably 16 GPa or less, and more preferably 15 GPa or less. When the bending elastic modulus is such a range, the adhesion when a PAS resin molded article is combined with a metal member is excellent, and therefore a composite member has excellent conductivity. In order to adjust the bending elastic modulus within such a range, for example, a method in which the melt viscosity (V6) of the PAS resin is adjusted within the range of 50 to 2,000 Pa·s according to the content proportion of the PAS resin in the resin composition is adopted. For example, when the PAS resin composition contains a large amount of a component other than the PAS resin, the thermal conductivity of the resin composition is high, and the crystallization rate tends to increase. Therefore, the melt viscosity of the PAS resin can be increased to adjust crystallization behavior. A method for adjusting the weld strength is not limited to the above-described method. The bending elastic modulus in the present disclosure is a value of bending elastic modulus measured using a dumbbell-shaped injection molded product conforming to a test piece of type A defined in ISO20753 as a test piece in accordance with a measurement method of ISO178, and can be measured by a method described in Examples.

## <Production Method for PAS Resin Composition>

A production method for a PAS resin composition according to the embodiment is a production method for a PAS resin composition including a step of mixing the PAS resin (A) and the carbon-based material (B) other than carbon fibers as essential components and melt-kneading a mixture of the PAS resin (A) and the carbon-based material (B) other than carbon fibers at a temperature equal to or more than the melting point of the PAS resin (A), in which the PAS resin (A) has a melt viscosity (V6) of 200 Pa·s or less, the carbon-based material (B) other than carbon fibers has a pH of 6 or more, the mixing amount of the carbon-based material (B) other than carbon fibers is 5 to 80 parts by mass relative to 100 parts by mass of the PAS resin (A), and a bending elastic modulus is 18 GPa or less. The method will be described in detail below.

The production method for the PAS resin composition according to the embodiment includes a step of mixing the above-described essential components and melt-kneading the mixture at a temperature range equal to or higher than the melting point of the PAS resin (A). More specifically, the PAS resin composition according to the embodiment contains the essential components and if necessary, the other optional component. Examples of the production method for the resin composition used in the present invention include, but not particularly limited to, a method in which the essential components and if necessary, the optional component are mixed and melt-kneaded, and specifically, are homogeneously mixed under drying by a tumbler, a Henschel mixer, or the like, if necessary, and then supplied to a twin-screw extruder and melt-kneaded.

Melt-kneading can be performed under heating within a temperature range at which the resin temperature is equal to or higher than the melting point of the PAS resin (A), a temperature range at which the resin temperature is preferably equal to or higher than the melting point plus 10°C, and a temperature range at which the resin temperature is more preferably equal to or higher than the melting point plus 10°C, or still more preferably equal to or higher than the melting point plus 20°C, and preferably equal to or lower than the melting point plus 100°C, or still more preferably equal to or lower than the melting point plus 50°C.

From the viewpoint of dispersibility and productivity, it is preferable that a melt-kneader be a twin-screw kneading extruder. For example, it is preferable that melt-kneading be performed while the amount of resin component discharged is controlled within the range of 5 to 500 (kg/hr) and the screw rotation speed is controlled within the range of 50 to 500 (rpm) as appropriate, and it is further preferable that melt-kneading be performed under a condition in which the ratio (the amount/the rotation speed) is within the range of 0.02 to 5 (kg/hr/rpm). Each of the components may be added to the melt-kneader and mixed simultaneously or separately. For example, when the PA fibers (B) as the essential component among the components and, if necessary, the other fibrous filler are added, it is preferable that they be supplied to the extruder from a side feeder of the twin-screw kneading extruder from the viewpoint of dispersibility. The side feeder is positioned such that the ratio of the distance between a resin-supplying portion (top feeder) of the extruder and the side feeder to the full length of screw of the twin-screw kneading extruder is preferably 0.1 or more, and more preferably 0.3 or more. The ratio is preferably 0.9 or less, and more preferably 0.7 or less.

The PAS resin composition according to the embodiment thus obtained by melt-kneading is a melt-kneaded mixture containing the essential components, and the optional component and a component derived from the optional component added, if necessary. Therefore, the PAS resin composition according to the embodiment has morphology in which the PAS resin (A) forms a continuous phase and the other essential component and the optional component are dispersed.

It is preferable that after the melt-kneading, a publicly known method be performed, for example, the PAS resin composition according to the embodiment in a melted state be extrusion molded into a strand shape and then processed in a form of pellet, chip, granule, powder, or the like, and if necessary, pre-dried within the temperature range of 100 to 150°C.

<PAS Resin Molded Article and Production Method for PAS Resin Molded Article>

A molded article according to the embodiment is formed by melt-molding the PAS resin composition. A production method for the molded article according to the embodiment includes a step of melt-molding the PAS resin composition. Therefore, the molded article according to the embodiment has morphology in which the PAS resin (A) forms a continuous phase and the other essential components and the optional component are dispersed. The PAS resin composition has such morphology, and therefore a molded article having excellent thermal conductivity and mechanical strength is obtained.

The PAS resin composition according to the embodiment may be subjected to various types of molding, such as injection molding, compression molding, composite, sheet, or pipe extrusion molding, drawing molding, blow molding, and transfer molding. The PAS resin composition is particularly suitable for application of injection molding due to excellent mold releasability. Under molding by injection molding, each molding condition is not particularly limited. The PAS resin composition can be molded usually by a general method. For example, after the step of melting the PAS resin composition in an injection molding machine such that the resin temperature is equal to or higher than the melting point of the PAS resin (A), preferably equal to or higher than the melting point by 10°C, more preferably within the range of the melting point plus 10°C to the melting point plus 100°C, and further preferably within the range of the melting point plus 20°C to the melting point plus 50°C, the PAS resin composition may be injected into a mold from a resin discharge port and molded. In this case, the mold temperature may be set within a publicly known temperature range, for example, to room temperature (23°C) to 300°C, and preferably 130°C to 190°C.

The production method for the molded article according to the embodiment may include a step of annealing the molded article. In the annealing, an optimal condition is selected depending on the use application, the shape, and the like of the molded article, and the annealing temperature is equal to or higher than the glass transition temperature of the PAS resin (A), preferably equal to or higher than the glass transition temperature plus 10°C, and more preferably equal to or higher than the glass transition temperature plus 30°C. The annealing temperature is preferably 260°C or lower, and more preferably 240°C or lower. Although the annealing time is not particularly limited, the annealing time is preferably 0.5 hours or more, and more preferably 1 hour or more. The annealing time is preferably 10 hours or less, and more preferably 8 hours or less. When the annealing time is within such a range, the strain of the obtained molded article is reduced, the crystallinity of the resin is improved, and thermal conductivity and mechanical properties are further improved. Therefore, this is preferable. The annealing may be performed in air, and preferably in an inert gas such as a nitrogen gas.

The molded article according to the embodiment includes a remolded article obtained by reusing a molded article in which the PAS resin composition is melt-molded. Specifically, the molded article includes an article obtained by cleaning a sprue or a runner generated during production of a molded article, a molded article collected as a nonstandard one, or a molded article used once as a product, if necessary, pulverizing the article, and melt-molding the article at a temperature equal to or higher than the melting point of the PAS resin again. It is preferable that the pulverized molded article be mixed with the PAS resin composition and used in recycling from the viewpoint of mechanical strength. The size of the molded article during pulverization is not particularly limited, and the size is preferably the same as the size of the PAS resin composition to be mixed from the viewpoint of mixing properties and processability. The mixing ratio of the pulverized molded article is preferably 50 parts by mass or less, more preferably 40 parts by mass or less, and still more preferably 20

parts by mass or less, relative to 100 parts by mass of the PAS resin composition. When the mixing ratio is within such a range, recycling properties can be improved without impairing the effects exhibited by the PAS resin composition of the present disclosure.

<Composite and Production Method for Composite>

A composite according to the embodiment is obtained by joining the molded article described above to a metal member. A production method for a composite according to the embodiment includes a step of producing a molded article by the above-described method and a step of joining the obtained molded article to a metal member.

A metal member applicable to the embodiment is not particularly limited as long as the effects of the present invention are not impaired, and a publicly known metal member can be used. Examples of the metal member include aluminum, copper, stainless, magnesium, iron, titanium, and alloys containing them. Specific examples thereof include iron, an alloy containing iron as a main component, for example, at a ratio of 20% by mass or more, more preferably 50% by mass or more, and still more preferably 80% by mass or more, and carbon, silicon, manganese, chromium, tungsten, molybdenum, phosphor, titanium, vanadium, nickel, zirconium, or boron, such as stainless steel or a steel material (hereinafter referred to as iron alloy), aluminum, an alloy containing aluminum as a main component and copper, manganese, silicon, magnesium, zinc, or nickel (hereinafter referred to as aluminum alloy), magnesium, an alloy containing magnesium as a main component and zinc, aluminum, or zirconium (hereinafter referred to as magnesium alloy), copper, an alloy containing copper as a main component, and zinc, tin, phosphorus, nickel, magnesium, silicon, or chromium (hereinafter referred to as copper alloy), titanium, and an alloy containing titanium as a main component and copper, manganese, silicon, magnesium, zinc, or nickel (hereinafter referred to as titanium alloy). Among these, iron, an iron alloy, an aluminum alloy, a magnesium alloy, a copper alloy, and a titanium alloy are more preferable, and an iron alloy, an aluminum alloy, and a magnesium alloy are still more preferable. The shape of the metal member is not particularly limited, and examples thereof include a plate shape, a curved plate shape, a rod shape, a cylindrical shape, and a block shape into which the metal member is processed by material removal processing, such as plastic working, punching, machining, polishing, or electric discharge machining through pressing. In addition, the metal member may be a film-shaped metal member, such as metal foil.

The surface of the metal member may be subjected to roughening treatment. As a surface roughening method, a publicly known method may be used. Examples of the method include (1) an immersion method using a corrosive aqueous solution or a corrosive suspension, (2) an anodization method, and (3) mechanical machining through blasting or laser processing. Among these methods, (1) the immersion method using a corrosive aqueous solution or a corrosive suspension or (2) the anodization method is particularly preferable as a method for roughening the surface of the metal member. When the metal member is surface-treated, it is preferable to process the metal member into a predetermined shape by material removal processing, such as plastic working, punching, machining, grinding, or electric discharge machining through cutting or pressing before formation of the finely uneven surface described above.

A primer layer may be formed on the surface of the surface-treated metal member. A material constituting the primer layer is not particularly limited, and the material is typically formed from a primer resin material containing a resin component. The primer resin material is not particularly limited, and a publicly known primer resin material can be used. Specific examples thereof include a publicly known polyolefin-based primer, a publicly known epoxy-based primer, and a publicly known urethane-based primer. A method for forming a primer layer is not particularly limited. For example, a solution of the primer resin material or an emulsion of the primer resin material can be applied to the surface-treated metal member to form the primer layer. Examples of a solvent used to form the solution include toluene, methyl ethyl ketone (MEK), and dimethyl phosphoramide (DMF). Examples of a solvent used to form the emulsion include aliphatic hydrocarbon and water.

A method for joining the resin molded article of the present disclosure to the metal member is not particularly limited as long as the effects of the present invention are not impaired. A publicly known method or device can be used. Examples of the method include a joining method by melt-molding the resin composition of the present disclosure, a method for welding the metal member on the molded article of the present disclosure, a method for swaging the metal member with the molded article of the present disclosure, and a method for mechanically joining the molded article of the present disclosure to the metal member.

Examples of the joining method by melt-molding the resin composition of the present disclosure include a method that performs so-called insert molding that undergoes a step of inserting the metal member into a mold of an injection molding machine and then injection-molding the resin composition onto the metal member. A device in the insert molding and the production method are not particularly limited, and a commercially available device can be used, and the production method can be performed in accordance with an ordinary method.

Examples of the method for welding the molded article of the present disclosure and the metal member include a method in which the molded article of the present disclosure and the metal member are brought into contact with each other, heated to join each other, or are heated, brought into contact with each other, and joined to each other, followed by

cooling. Specific examples of the method include a hot plate welding method, a vibration welding method, an infrared welding method, an infrared vibration welding method, a ultrasonic welding method, a highfrequency welding method, an inductive heating welding method, a rotation welding method, a laser welding method, a hot pressing method, a hot embossing method, and a friction stir welding method. As a device used in these joining methods, a commercially available device can be used, and the production method can be performed in accordance with an ordinary method.

Examples of the method for swaging the metal member onto the molded article of the present disclosure include a method in which a rivet is inserted into a hole of the molded article of the present disclosure and a hole of the metal member and deformed to fasten the molded article and the metal member. Specific examples of the method include a press riveting method, a spin riveting method, and a heat riveting method. As a device used in these joining methods, a commercially available device can be used, and the production method can be performed in accordance with an ordinary method. Examples of the method for mechanically joining the molded article of the present disclosure to the metal member include a mechanical fastening method using a screw, a pin, a shaft, a bolt, a nut, a clamp, or the like, and fixation using a fitting structure.

<Application>

The PAS resin molded article according to the embodiment has excellent toughness, and therefore the adhesive force when the PAS resin molded article is combined with the metal member or another resin member is high, heat or electrical conduction loss in the interface can be reduced, and the long-term stability of the interface is excellent. Therefore, the PAS resin molded article is suitably used as a member constituting a composite with the metal member or the resin member. The composite according to the embodiment has excellent conductivity and long-term stability, and therefore the composite is particularly suitable for application of a conductive part and application of an electromagnetic wave shield part. Specifically, the composite can be suitably used for a conductive part, such as an electrode-surrounding part of a lithium-ion battery, a conveying tray, a battery part, a conductive reel, or a conductive pallet, an electromagnetic wave shield part, such as an electronic apparatus case, an inverter case, an ECU housing, or a medical equipment case, or the like. The molded article and composite according to the embodiment can be used not only for the conductive part and the electromagnetic wave shield part but also for the following general application. Examples thereof include electrical and electronic parts typified by box-shaped protecting and supporting members for electrical and electronic part integrated modules, a plurality of separate semiconductors or modules, a sensor, a LED lamp, a connector, a socket, a resistor, a relay case, a switch, a coil bobbin, a capacitor, a variable capacitor case, a light pickup, an oscillator, various terminal plates, a transformer, a plug, a printed board, a tuner, a speaker, a microphone, a headphone, a compact motor, a magnetic head base, a power module, a terminal stand, a semiconductor, a liquid crystal, a FDD carriage, a FDD chassis, a motor brush holder, a parabola antenna, and a computer-related part; home and office electrical product parts typified by a VTR part, a television part, an iron, a hair dryer, a rice cooker part, a microwave oven part, an acoustic part, audio and video apparatus parts such as an audio laser disc, a compact disc, a DVD disc, and a Blu-ray disc, an illumination part, a refrigerator part, an air conditioner part, a typewriter part, a word processor part, and water-section apparatus parts such as a water heater and a sensor for water amount and temperature of a bath; machine-related parts typified by an office computer-related part, a telephone-related part, a facsimile-related part, a copying machine-related part, a jig for cleaning, a motor part, a lighter, and a typewriter; optical instruments and precision machine-related parts typified by a microscope, a binocular, a camera, and a clock; and automobile and vehicle-related parts such as an alternator terminal, an alternator connector, a brush holder, a slip ring, an IC regulator, a potentiometer base for light dimmer, a relay block, an inhibitor switch, various valves such as an exhaust gas valve, various fuel-related, outlet, and inlet pipes, an air intake nozzle snorkel, an intake manifold, an engine cooling water joint, a carburetor main body, a carburetor spacer, an exhaust gas sensor, a cooling water sensor, an oil temperature sensor, a brake pad wear sensor, a throttle positioner, a crankshaft positioner, a thermal sensor, an air flow meter, a brake pad wear sensor, an air conditioner thermostat base, a hot-air flow control valve, a brush holder for a radiator motor, a water pump impeller, a turbine vane, a wiper motor-related part, a distributor, a starter switch, an ignition coil and a bobbin thereof, a motor insulator, a motor rotor, a motor core, a starter relay, a wire harness for transmission, a window washer nozzle, an air conditioner panel switch board, a coil for a fuel-related electromagnetic valve, a fuse connector, a horn terminal, an electrical part insulation plate, a stepper motor rotor, a lamp socket, a lamp reflector, a lamp housing, a brake piston, a solenoid bobbin, an engine oil filter, and an ignition device case. The molded article and the composite can be adopted in various use applications. Examples

Hereinafter, the present invention will be described using Examples and Comparative Examples. However, the present invention is not limited to these Examples. Hereinafter, "%" and "part(s)" are based on mass unless otherwise specified.

<Examples 1 to 10 and Comparative Examples 1 to 6>

Materials were mixed in accordance with composition components and mixing amounts listed in Table 1. The

materials were supplied to a twin-screw extruder with a vent "TEX30α (product name)" manufactured by The Japan Steel Works, Ltd., and melt-kneaded at a resin component discharge amount of 30 kg/hr, a screw rotation speed of 200 rpm, and a set resin temperature of 310°C, to obtain pellets of a resin composition. Glass fibers and polyamide fibers were supplied from a side feeder (S/T ratio: 0.5), and other materials were homogeneously mixed in a tumbler in advance and then supplied from a top feeder. The obtained pellets of the resin composition were dried in a gear oven at 140°C for 2 hours, and then injection-molded to produce various test pieces. The test pieces were subjected to the following tests.

<Evaluation>

(1) Measurement of Charpy Impact Strength

The pellets obtained in each of Examples and Comparative Examples were supplied to an injection molding apparatus (SE-75D-HP) manufactured by Sumitomo Heavy Industries, Ltd., in which a cylinder temperature was set to 310°C, and injection-molded using an ISO Type 1A dumbbell test piece molding mold in which the mold temperature was adjusted to 140°C, to obtain an ISO Type-A dumbbell test piece. In the production, the resin was injected from a single gate such that the test piece did not contain a weld part. The central portion of a dumbbell-shaped test piece was cut into a bar shape with a length of 80 mm, a width of 10 mm, and a thickness of 4 mm and then notched to obtain an impact resistance test piece. The impact resistance test piece was subjected to a Charpy impact test in accordance with ISO 179-1/1eA, and the impact strength ($kJ/mm^2$) was measured. The results are listed in Tables 1 and 2.

(2) Measurement of Bending Elastic Modulus

Each bending elastic modulus (GPa) was measured using the same ISO type-A dumbbell test piece as in (1) as a test piece in accordance with ISO 178. The results are listed in Tables 1 and 2.

(3) Measurement of Volume Resistivity

The volume resistivity of each test piece was measured with "LORESTA AX MCP-T370" (measurement upper limit: $10^6$ Ω·cm) manufactured by Nittoseiko Analytech Co., Ltd., under conditions of a room temperature of 21°C and a humidity of 67RH% in accordance with JIS K 7194 "Testing method for resistivity of conductive plastics with a four-point probe array." The pellets obtained in each of Examples and Comparative Examples were supplied to an injection molding apparatus (SE-75D-HP) manufactured by Sumitomo Heavy Industries, Ltd., in which a cylinder temperature was set to 310°C, and injection-molded into a plate shape (80 mm in length, 50 mm in width, and 2 mm in thickness) using a plate molding mold in which the mold temperature was adjusted to 140°C. The molded article was used as a test piece. The results are listed in Tables 1 and 2.

(4) Measurement of Electric Resistance Value of Molded Article

The pellets obtained in each of Examples and Comparative Examples were supplied to an injection molding apparatus (SE-75D-HP) manufactured by Sumitomo Heavy Industries, Ltd., in which a cylinder temperature was set to 310°C, and injection-molded using a molding mold in which the mold temperature was adjusted to 140°C, to obtain a molded article having a length of 20 mm, a width of 40 mm, and a thickness of 1 mm. The obtained molded article was interposed between two aluminum alloy (A1050) plates each having a length of 30 mm, a width of 50 mm, and a thickness of 1 mm in a thickness direction, and the whole molded article was pressed under a pressure of 30 kPa in contact with the aluminum alloy plates. An electrode was attached to each of the aluminum alloy plates as it was, and the electric resistance value (kΩ) under application of a current of 0.1 mA was measured with a resistance meter RM3545 manufactured by HIOKI E.E. CORPORATION. 30 sheets of the molded article were measured, the average value of the measured resistance values was set to an electric resistance value (kΩ), and a value obtained by dividing the standard deviation by the average value was evaluated as a dispersion. The results are listed in Tables 1 and 2.

(5) Long-Term Stability Evaluation Value

The same molded article and aluminum plates as those in (4) were left to stand in a constant temperature and humidity chamber of 85°C and 95%RH while pressing at 10 kPa and fixing. A corrosion product was removed by a method using nitric acid in accordance with chemical corrosion product removal method of JIS Z2371, the aluminum plates after standing were observed with a three-dimensional measurement device (VR-6000 manufactured by Keyence Corporation), and the maximum value of a pitting depth in a contact surface with the product was measured as a maximum pitting depth. As the maximum pitting depth is smaller, the long-term stability is more excellent. The results are listed in Tables 1

and 2.

(6) Determination of Carboxy Group Content of PAS Resin

The PPS resin used in each of Examples and Comparative Examples was pressed at 350°C and a load of 10 MPa for 60 seconds and then quenched to 25°C over 60 seconds to produce an amorphous film. The obtained amorphous film was measured with a Fourier-transform infrared spectrometer (hereinafter abbreviated as "FT-IR spectrometer"). The relative intensity of the absorbance at 1,705 $cm^{-1}$ relative to the absorbance at 630.6 $cm^{-1}$ of the infrared absorption spectrum was determined, and the carboxy group content in the measurement sample (hereinafter abbreviated as "total carboxy group content") was separately determined using a calibration curve created by a method described below. The results are listed in Tables 1 and 2. The carboxy group content is represented by the number of moles of carboxy groups in 1 g of a resin mixture and expressed in units of μmol/g. The calibration curve was created by the following method. A predetermined amount of 4-chlorophenylacetic acid was first added to a PAS resin that had been produced so as to have a carboxylate on the terminal of the molecule without acid treatment, and sufficiently mixed, the same film as described above was produced, and measurement was performed with a FT-IR spectrometer. The calibration curve was created by plotting the relative intensity ratio of absorbances at the two wavelengths described above with respect to the carboxy group content calculated from the addition amount of 4-chlorophenylacetic acid.

[Table 1]

| | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| A-1 | % | | | | | | | | 100 | | |
| A-2 | % | 100 | 100 | 100 | 100 | 100 | 100 | 100 | | 100 | 100 |
| B-2 | % | 30 | 30 | | | | | | 60 | | |
| B-3 | % | | | 8 | 8 | | | | | 5 | 8 |
| B-4 | % | | | | | 40 | | | | | |
| B-5 | % | | | | | | 40 | | | | |
| B-6 | % | | | | | | | 40 | | | |
| C-1 | % | | | | | 20 | 20 | 20 | | | |
| C-2 | % | 45 | 45 | 55 | 70 | | | | 30 | 80 | |
| D-1 | % | 0.5 | 0.5 | 0.5 | 0.5 | 0.5 | 0.5 | 0.5 | 0.5 | 0.5 | 0.5 |
| E-1 | % | 3 | | 3 | 3 | 3 | 3 | 3 | 3 | 3 | 15 |
| F-1 | % | | | | 60 | | | | | | |
| Bending elastic modulus | GPa | 12 | 15 | 11 | 17 | 17 | 17 | 18 | 17 | 16 | 9 |
| Charpy impact strength | $kJ/m^2$ | 6 | 4 | 7 | 4 | 4 | 4 | 4 | 4 | 7 | 14 |
| Volume resistivity | Ω·cm | 15 | 14 | 8 | 10 | 15 | 10 | 6 | 5 | 60 | 5 |
| Electric resistance value | kΩ | 2 | 2 | 1 | 10 | 5 | 5 | 3 | 0.5 | 50 | 1 |
| Dispersion | % | 20 | 20 | 15 | 40 | 45 | 40 | 50 | 30 | 25 | 15 |
| Maximum pitting depth | μm | 73 | 60 | 66 | 77 | 81 | 62 | 64 | 74 | 83 | 71 |

[Table 2]

| | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|
| A-2 | % | 100 | 100 | 100 | | 100 | 100 |
| a-4 | % | | | | 100 | | |
| b-1 | % | 50 | | | | | |
| B-2 | % | | | 85 | 30 | | |
| B-3 | % | | 2 | | | 8 | |

(continued)

| | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|
| C-1 | % | | | | | | 25 |
| C-2 | % | 45 | 55 | 45 | 45 | 100 | |
| D-1 | % | 0.5 | 0.5 | 0.5 | 0.5 | 0.5 | 0.5 |
| E-1 | % | 3 | 3 | 3 | 3 | 3 | 3 |
| F-1 | % | | | | | 90 | 40 |
| Bending elastic modulus | GPa | 12 | 12 | 16 | Not molded | 20 | 25 |
| Charpy impact strength | $kJ/m^2$ | 4 | 7 | 2 | Not molded | 6 | 5 |
| Volume resistivity | $\Omega\cdot cm$ | 15 | 150 | 5 | Not molded | 15 | 15 |
| Electric resistance value | $k\Omega$ | 5 | 200 | 0.5 | Not molded | 40 | 30 |
| Dispersion | % | 25 | 40 | 20 | Not molded | 130 | 120 |
| Maximum pitting depth | $\mu m$ | 154 | 0 | 0 | Not molded | 0 | 0 |

As the mixing ratios of the mixing components in Tables 1 to 2, the followings were used.

· PPS resin

A-1: PPS resin (melt viscosity (V6): 10 Pa·s, zeta potential: -58 mV, carboxy group content: 30 $\mu$mol/g)
A-2: PPS resin (melt viscosity (V6): 50 Pa·s, zeta potential: -64 mV, carboxy group content: 30 $\mu$mol/g)
A-3: PPS resin (melt viscosity (V6): 200 Pa·s, zeta potential: -63 mV, carboxy group content: 30 $\mu$mol/g)
a-4: PPS resin (melt viscosity (V6): 400 Pa·s, zeta potential: -60 mV, carboxy group content: 20 $\mu$mol/g)

· Carbon-based material

b-1: carbon black, "MA-100" manufactured by Mitsubishi Chemical Corporation, pH: 3.5, DBP absorption amount: 100 $cm^3$/100 g, average primary particle diameter: 24 nm
B-2: carbon black, "#4400" manufactured by Tokai Carbon Co., Ltd., pH: 6, DBP absorption amount: 138 $cm^3$/100 g, average primary particle diameter: 38 nm
B-3: carbon black, "Ketjen black" manufactured by Lion Specialty Chemicals Co., Ltd., pH: 9, DBP absorption amount: 360 $cm^3$/100 g, average primary particle diameter: 40 nm
B-4: flake graphite, "CNP15" manufactured by Ito Graphite Co., Ltd., pH: 8, average particle diameter: 15 $\mu$m
B-5: artificial graphite, "AGB-604" manufactured by Ito Graphite Co., Ltd., pH: 8, average particle diameter: 55 $\mu$m
B-6: expandable graphite, "EC500" manufactured by Ito Graphite Co., Ltd., pH: 8, average particle diameter: 25 $\mu$m

C-1: carbon fibers, "HT C702" manufactured by Teijin Limited, average fiber length: 6 mm
C-2: glass fibers, "T-717H" manufactured by Nippon Electric Glass Co., Ltd., fiber length: 3 mm, average diameter: 10 $\mu$m

D-1: silane-coupling agent, "XIAMETER (registered trademark) OFS-6040" manufactured by Dow Chemical Company
E-1: thermoplastic elastomer (ethylene-methyl acrylate-glycidyl methacrylate copolymer at a ratio of 64 mol%: 30 mol%: 6 mol%)

F-1: calcium carbonate, "Calcium carbonate grade 1" manufactured by Sankyo Seifun Co., Ltd.

Comparison of Examples with Comparative Examples in Tables 1 and 2 shows that the molded article obtained by melt-molding the resin composition of each of Examples has excellent Charpy impact strength and a low volume resistivity, and the composite of each of Examples has a low electric resistance value and a small dispersion and excellent long-term stability. As compared with Examples, the long-term stability in Comparative Example 1 is lower, the electric resistance value in Comparative Example 2 is higher, the toughness in Comparative Example 3 is lower, the processability in Comparative Example 4 is lower, and the dispersion of electric resistance value in Comparative Examples 5 and 6 is larger. All required performances are not satisfied.

## Claims

**1.** A polyarylene sulfide resin composition comprising a polyarylene sulfide resin (A) and a carbon-based material (B) other than carbon fibers as essential components, wherein

the polyarylene sulfide resin (A) has a melt viscosity (V6) of 200 Pa·s or less,
the carbon-based material (B) other than carbon fibers has a pH of 6 or more,
a mixing amount of the carbon-based material (B) other than carbon fibers is 5 to 80 parts by mass relative to 100 parts by mass of the polyarylene sulfide resin (A), and
a bending elastic modulus is 18 GPa or less,
provided that the melt viscosity (V6) represents a melt viscosity after the resin is held by a flow tester at a temperature of 300°C under a load of 1.96 MPa for six minutes using an orifice having a ratio of an orifice length to an orifice diameter of 10/1.

**2.** The polyarylene sulfide resin composition according to claim 1, further comprising a fibrous filler (C).

**3.** The polyarylene sulfide resin composition according to claim 2, wherein a mixing amount of the fibrous filler (C) is 20 to 80 parts by mass relative to 100 parts by mass of the polyarylene sulfide resin (A).

**4.** The polyarylene sulfide resin composition according to claim 1 or 2, wherein

the carbon-based material (B) other than carbon fibers contains furnace black, and
the furnace black has a DBP absorption amount of 100 $cm^3$/100 g or more and a primary particle diameter of 60 nm or less.

**5.** The polyarylene sulfide resin composition according to claim 1 or 2, wherein the carbon-based material (B) other than carbon fibers contains graphite having an average particle diameter of 5 to 400 μm.

**6.** The polyarylene sulfide resin composition according to claim 1 or 2, wherein a zeta potential at a pH of 7.8 to 8.2 of the polyarylene sulfide resin (A) measured by a streaming potential method is -70 mV or more.

**7.** A molded article obtained by melt-molding the polyarylene sulfide resin composition according to claim 1 or 2.

**8.** A composite member obtained by joining the molded article according to claim 7 to a metal member.

**9.** A secondary battery member comprising the composite member according to claim 8.

**10.** A production method for a polyarylene sulfide resin composition, the production method comprising a step of mixing a polyarylene sulfide resin (A) and a carbon-based material (B) other than carbon fibers as essential components and melt-kneading a mixture of the polyarylene sulfide resin (A) and the carbon-based material (B) other than carbon fibers at a temperature equal to or higher than a melting point of the polyarylene sulfide resin (A),
wherein

the polyarylene sulfide resin (A) has a melt viscosity (V6) of 200 Pa·s or less,
the carbon-based material (B) other than carbon fibers has a pH of 6 or more,
a mixing amount of the carbon-based material (B) other than carbon fibers is 5 to 80 parts by mass relative to 100 parts by mass of the polyarylene sulfide resin (A), and

a bending elastic modulus is 18 GPa or less,
provided that the melt viscosity (V6) represents a melt viscosity after the resin is held by a flow tester at a temperature of 300°C under a load of 1.96 MPa for six minutes using an orifice having a ratio of an orifice length to an orifice diameter of 10/1.

**11.** The polyarylene sulfide resin composition according to claim 10, further comprising a fibrous filler (C).

**12.** The production method for a polyarylene sulfide resin composition according to claim 11, wherein a mixing amount of the fibrous filler (C) is 20 to 80 parts by mass relative to 100 parts by mass of the polyarylene sulfide resin (A).

**13.** The production method for a polyarylene sulfide resin composition according to claim 10 or 11, wherein

the carbon-based material (B) other than carbon fibers contains furnace black, and
the furnace black has a DBP absorption amount of 100 $cm^3$/100 g or more and a primary particle diameter of 60 nm or less.

**14.** The production method for a polyarylene sulfide resin composition according to claim 10 or 11, wherein the carbon-based material (B) other than carbon fibers contains graphite having an average particle diameter of 5 to 400 μm.

**15.** The production method for a polyarylene sulfide resin composition according to claim 10 or 11, wherein a zeta potential at a pH of 7.8 to 8.2 of the polyarylene sulfide resin (A) measured by a streaming potential method is -70 mV or more.

**16.** A production method for a molded article, the production method comprising: a step of producing a polyarylene sulfide resin composition by the method according to claim 10 or 11; and a step of melt-molding the obtained polyarylene sulfide resin composition.

**17.** A production method for a composite, the production method comprising: a step of producing a molded article by the method according to claim 16; and a step of joining the obtained molded article to a metal member.

**18.** A method using the composite according to claim 17 for a secondary battery member.

## INTERNATIONAL SEARCH REPORT

International application No.
**PCT/JP2024/026546**

**A. CLASSIFICATION OF SUBJECT MATTER**

***C08L 81/02***(2006.01)i; ***C08K 3/04***(2006.01)i; ***C08K 7/02***(2006.01)i
FI: C08L81/02; C08K3/04; C08K7/02

According to International Patent Classification (IPC) or to both national classification and IPC

**B. FIELDS SEARCHED**

Minimum documentation searched (classification system followed by classification symbols)

C08L81/02; C08K3/04; C08K7/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-155288 A (POLYMER ASSOCIATES KK) 15 August 2013 (2013-08-15) claims, paragraphs [0056]-[0057], examples | 1-2, 4, 7-11, 13, 16-18 |
| Y | | 6, 15 |
| A | | 3, 5, 12, 14 |
| X | JP 8-302189 A (IDEMITSU PETROCHEMICAL CO., LTD.) 19 November 1996 (1996-11-19) claims, examples | 1-3, 7-12, 16-18 |
| Y | | 6, 15 |
| A | | 4-5, 13-14 |
| X | JP 2001-348478 A (TORAY INDUSTRIES, INC.) 18 December 2001 (2001-12-18) claims, examples | 1-3, 7-12, 16-18 |
| Y | | 6, 15 |
| A | | 4-5, 13-14 |

☑ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 September 2024** | **17 September 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

INTERNATIONAL SEARCH REPORT

International application No.
**PCT/JP2024/026546**

**C. DOCUMENTS CONSIDERED TO BE RELEVANT**

| Category* | Citation of document, with indication, where appropriate, of the relevant passages | Relevant to claim No. |
|---|---|---|
| X | JP 2007-31611 A (TEIJIN CHEMICALS LTD.) 08 February 2007 (2007-02-08) claims, examples | 1-3, 5, 7-12, 14, 16-18 |
| Y | | 6, 15 |
| A | | 4, 13 |
| Y | JP 2023-930 A (DIC CORPORATION) 04 January 2023 (2023-01-04) claims, examples | 6, 15 |

Form PCT/ISA/210 (second sheet) (July 2022)

**INTERNATIONAL SEARCH REPORT**
**Information on patent family members**

International application No.
**PCT/JP2024/026546**

| Patent document cited in search report | Publication date (day/month/year) | Patent family member(s) | Publication date (day/month/year) |
|---|---|---|---|
| JP 2013-155288 A | 15 August 2013 | (Family: none) | |
| JP 8-302189 A | 19 November 1996 | US 5733962 A<br>claims, examples<br>EP 739936 A1 | |
| JP 2001-348478 A | 18 December 2001 | (Family: none) | |
| JP 2007-31611 A | 08 February 2007 | (Family: none) | |
| JP 2023-930 A | 04 January 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006019227 A
- WO 2002093670 A
- JP H07228699 A
- WO 2010058713 A